# FASCICULE DE BREVET EUROPEEN

(11) **EP 0 494 824 B1**
(45) Date de publication et mention de la délivrance du brevet: **12.04.1995**
(21) Numéro de dépôt: 92400050.8
(22) Date de dépôt: 09.01.1992
(51) Int. Cl.: B60J 1/02

(54) **Vitrage automobile destiné au collage**
Kraftfahrzeugverglasung mit Klebevorrichtung
Motor vehicle glazing incorporating means of adhesion

(30) Priorité: 11.01.1991 DE 4100631
(43) Date de publication de la demande: 15.07.1992
(73) Titulaire: SAINT GOBAIN VITRAGE INTERNATIONAL, 92400 Courbevoie (FR); VEGLA Vereinigte Glaswerke GmbH, D-52066 Aachen (DE)
(72) Inventeur: Kunert, Heinz, Dr., W-5000 Köln 41 (DE)
(74) Mandataire: Muller, René

(56) Documents cités:
- EP-A- 0 312 496
- EP-A- 0 345 134
- DE-A- 3 518 203
- DE-A- 3 602 198

## Description

L'invention concerne un vitrage automobile préparé pour le collage dans la baie d'une carrosserie automobile et équipé d'un profilé en forme de cadre à base d'un polymère durci collé au vitrage.

Il est connu de simplifier le montage des vitrages automobiles en utilisant un profilé qui enserre le bord du verre ou bien de les équiper du côté du vitrage dirigé vers la tôle de la baie d'un profilé en forme de cadre collé. En général, le profilé en forme de cadre qui enserre le bord du verre est fait d'un polymère thermoplastique en PVC ou d'un thermodurcissable tel que le polyuréthane. La technique de mise en oeuvre est l'encapsulation dans laquelle le vitrage est placé dans le moule d'une machine où l'on injecte après sa fermeture le ou les composants qui durciront et qui formeront le cadre tout en le faisant adhérer au verre. Des vitrages de ce type sont connus en particulier dans les documents EP-A-0 076 924, US-A-4 139 234 et EP-A-0 145 443. Les profilés en forme de cadre qui adhèrent au bord et d'un seul côté des vitrages sont faits en particulier de polyuréthane à deux composants et sont de préférence déposés au bord du vitrage grâce à une buse d'extrusion guidée par ce même bord. De tels vitrages sont décrits par exemple dans les documents EP-A-0 121 481, EP-A-0 307 317 et EP-A-0 345 134.

Lorsque les vitrages automobiles ainsi préparés doivent être fixés dans la baie après avoir été pourvus d'un cordon de colle, il est nécessaire de positionner soigneusement le vitrage dans la baie et également de le maintenir mécaniquement en place ou au moins de l'appuyer jusqu'à ce que le cordon de colle soit suffisamment durci pour que le vitrage ne se déplace plus sous l'action de son propre poids. En plus du positionnement du vitrage dans son plan, il faut également procéder à la mise en place dans la direction perpendiculaire à la surface de la baie. En effet, en particulier avec les vitrages très bombés, il existe à la périphérie des tolérances de bombage qui doivent être compensées en adaptant la position du bord par rapport à la baie.

Pour fixer le vitrage pendant la durée du durcissement de la colle de montage il est connu d'utiliser des éclisses métalliques ou en matière plastique qui se déforment et qui se replient autour de la tôle de la baie (brevet DE-A-34 00 428). Cette méthode nécessite une main d'oeuvre supplémentaire pour replier les éclisses après mise en place du vitrage.

L'invention se donne pour mission de préparer un vitrage automobile du type précédent qui puisse rester en position après sa mise en place dans la baie durant la période de durcissement de la colle de montage sans l'aide d'accessoires mécaniques tout en simplifiant et en raccourcissant le processus de montage.

Selon l'invention ce but est atteint à l'aide d'un vitrage du type décrit plus haut et divulgué par EP-A-0 345 134, à savoir un vitrage automobile préparé pour le collage dans la baie d'une carrosserie grâce à un cadre profilé en polymère durci lié au vitrage, avec les moyens suivants :
a) le cadre profilé possédant du côté dirigé vers la tôle d'appui de la carrosserie au moins une nervure sensiblement perpendiculaire au vitrage,
b) placé à côté de la nervure et parallèlement à elle, un cordon d'une colle réactive de montage qui est destinée à fixer le vitrage en position dans la baie de la carrosserie en se durcissant sous l'action de conditions atmosphériques données,
c) placé de l'autre côté de la nervure, un moyen destiné à supporter le poids du vitrage et à le maintenir en place dans la baie de la carrosserie temporairement pendant la phase de durcissement de la colle réactive de montage, ledit vitrage étant caractérisé en ce que ledit moyen est un second cordon de colle en mastic qui garde en permanence sa plasticté.

Un vitrage automobile préparé selon l'invention permet de respecter les exigences pour un vitrage placé dans ses conditions d'utilisation et cela de surcroît avec des colles aux performances confirmées. En plus de sa fonction consistant à ajuster la distance entre le vitrage et la tôle de la carrosserie, la nervure sert également à séparer l'une de l'autre les deux colles. En plus, le dépôt des deux cordons de colle est grandement facilité puisque la nervure sert de guide aux buses d'extrusion qui les déposent. Le cordon de mastic plastique remplit quant à lui la fonction de maintenir en place le vitrage jusqu'à ce que la colle réactive puisse le faire elle-même. Pour remplir sa fonction, le mastic de ce premier cordon doit d'un côté avoir une bonne adhérence aussi bien sur le vitrage et sur le profil d'encadrement déposé sur lui que sur la tôle de la baie de la carrosserie. Mais par ailleurs il doit avoir une viscosité telle que lorsque l'on met le vitrage en position dans la baie, d'une part il se déforme de manière plastique sans nécessiter d'efforts excessifs mais que par ailleurs il supporte les efforts exercés par le vitrage sous l'effet de son poids sans se déformer. Cependant étant donné que contrairement à l'autres méthodes de fixation, ici les forces provoquées par le poids du vitrage se répartissent sur l'ensemble du cordon de mastic dont la longueur est égale au périmètre du vitrage, les forces unitaires qui agissent alors sur le cordon restent relativement limitées et les exigences pour le cordon qu'elles entraînent peuvent être satisfaites par des mastics classiques.

Pour garantir l'immobilité du vitrage pendant la phase de durcissement de la colle réactive la nervure perpendiculaire au vitrage faite d'un polymère durci aide le cordon de mastic à remplir son office. Etant donné qu'il est en grande partie en contact étroit avec la nervure, il peut s'y appuyer et sa déformation de ce côté là est limitée. Cela aide à garantir une faible déformation pendant la durée de la prise de la colle réactive.

Dans un développement particulièrement indiqué de l'invention, le cordon de mastic plastique est placé vers l'extérieur, c'est-à-dire à côté de la nervure perpendiculaire au vitrage entre celle-ci et le bord de la feuille.

En plus de sa fonction de fixation temporaire du vitrage, le cordon de mastic peut également assurer une fonction d'étanchéité. Cela est particulièrement indiqué quand par exemple le vitrage est un verre feuilleté et que la feuille intercalaire doit être protégée contre la pénétration d'humidité.

Dans une variante de réalisation de l'invention le profil d'encadrement comporte deux canaux voisins qui accueilleront chacun un cordon, l'un de mastic plastique, l'autre de colle réactive. Dans ce cas, la nervure perpendiculaire au vitrage, destinée à limiter la distance avec la tôle de la carrosserie se situe avantageusement entre les deux canaux.

D'autres avantages et des détails de l'invention qui correspondent aux revendications secondaires apparaîtront à la lecture de la description des différents exemples de mise en oeuvre qui suivent.

Les figures montrent successivement :
Fig. 1 : un vitrage monolithique avec un profilé d'encadrement unilatéral,
Fig. 2 : une variante d'un vitrage monolithique avec un profilé d'encadrement unilatéral à deux canaux,
Fig. 3 : autre variante d'un vitrage monolithique avec un profilé d'encadrement unilatéral à deux canaux,
Fig. 4 : autre variante d'un vitrage monolithique avec un cadre profilé, collé d'un seul côté du vitrage,
Fig. 5 : vitrage feuilleté avec un cadre profilé unilatéral,
Fig. 6 : autre forme de réalisation d'un vitrage feuilleté préparé selon l'invention,
Fig. 7 : profilé d'encadrement selon l'invention enchâssant le bord du vitrage monolithique,
Fig. 8 : autre variante d'un vitrage monolithique équipé d'un cadre profilé l'enchâssant correspondant à l'invention.

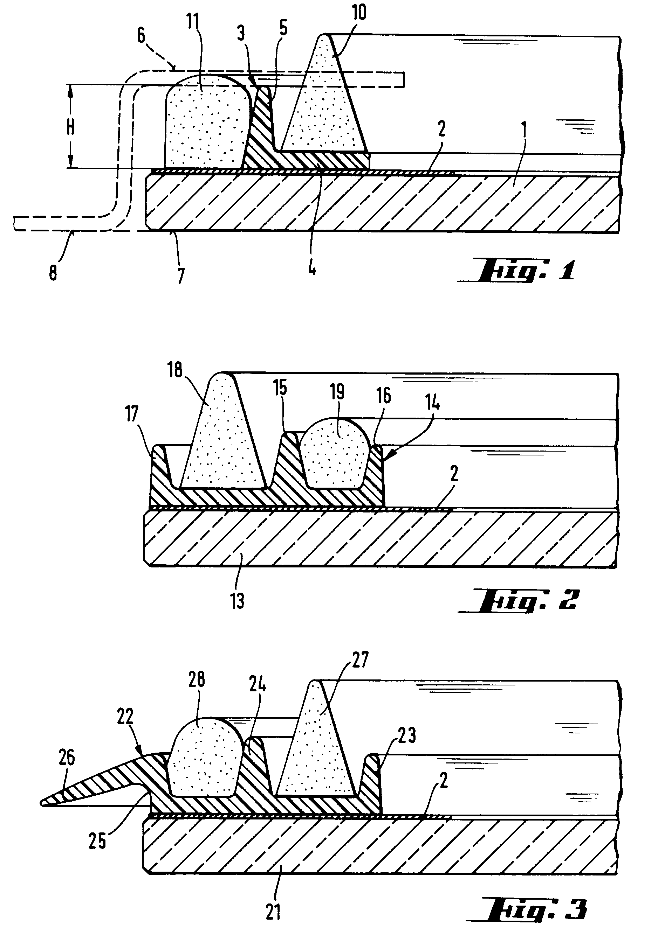

Sur la figure 1, on voit un vitrage 1 préparé selon l'invention pour être monté directement dans une baie de carrosserie. On a représenté sur la figure un vitrage monolithique mais il pourrait s'agir tout aussi bien d'un vitrage feuilleté. Le vitrage 1 est équipé tout le long de sa périphérie d'un cadre 2 constitué d'un dépôt opaque. Celui-ci est à base d'un colorant minéral qui a subi une cuisson. Sur ce cadre 2 on a déposé le long du bord du vitrage un cadre profilé 3 à section en forme de L. Ce profil 3 qui colle sur le revêtement opaque 2 comporte une base 4 et une nervure 5 sensiblement perpendiculaire à la base 4. Ce profilé est déposé directement sur le vitrage grâce à une buse d'extrusion selon une méthode connue. Un dispositif permettant la mise en oeuvre de la méthode est décrit par exemple dans le brevet EP-A-0 121 481 ou EP-A-0 345 134. De préférence, on dépose sur le cadre opaque 2 tout d'abord un produit promoteur d'adhérence adapté aux polymères constituant le profilé 3. Des composés chimiques destinés aussi bien à constituer la couche de primaire que le polymère du profilé 3 sont par exemple des polyuréthanes monocomposants durcissant à l'humidité tels que ceux qui sont décrits dans le brevet US-A-3 779 794. On peut également utiliser des polyuréthanes à deux composants comme ceux décrits dans les brevets européens EP-A-0 083 797 et EP-A-0 024 501.

La nervure 5 du profilé 3 a une hauteur H qui est calculée en fonction de la profondeur de la feuillure de la baie de la carrosserie de telle sorte que lorsque le vitrage est posé et que la nervure 5 est en appui sur la tôle 6 de la baie la surface 7 du vitrage 1 se trouve en continuité avec la surface extérieure 8 de la carrosserie qui entoure la baie. C'est-à-dire que H correspond sensiblement au minimum de la distance entre le vitrage monté et la tôle d'appui de la carrosserie 6.

Avant de déposer les deux cordons 10 et 11 destinés à la pose du vitrage qui seront déposés des deux côtés de la nervure 5 en contact avec le profil 3 polymérisé, il convient de laisser le durcissement s'effectuer. Cette polymérisation peut être accélérée dans un canal chauffant spécialement adapté.

De préférence, les cordons 10 et 11 sont déposés sur le vitrage juste avant son montage dans la carrosserie. Le cordon de colle 10 qui dans le cas de la figure 1 se trouve du côté de la zone de vision du vitrage 1 est composé d'une colle réactive. Ce sera par exemple un polyuréthane monocomposant de même nature que celui constituant le profilé 3. Cette colle a alors la propriété d'adhérer parfaitement audit profilé 3. On procède au dépôt du cordon 10 à l'aide d'une buse d'extrusion adaptée.

Du côté de la nervure 5 placée vers l'extérieur du vitrage on dépose le cordon 11 qui est constitué lui d'un mastic qui garde en permanence sa plasticité. Le cordon 11 dépasse légèrement la nervure 5. Ainsi au moment de la pose du vitrage dans la baie, il vient d'abord au contact de la tôle d'appui de la carrosserie 6. Le mastic du cordon 11 doit avoir une bonne adhérence sur le verre ou sur le dépôt opaque 2. Il doit en être de même sur la tôle 6. Pour éviter une déformation du cordon 11 sous l'action du poids du vitrage pendant le durcissement du cordon 10, c'est la nervure 5 du profilé 3 qui participe à ce moment-là au support du vitrage puisqu'elle est en contact sur toute sa longueur avec le cordon 11.

Des mastics adaptés pour constituer le cordon 11 sont par exemple à base de caoutchouc butyl. On peut utiliser par exemple les butyls qui servent à la fabrication de l'une des deux barrières des vitrages isolants.

Dans l'exemple présenté figure 2 ce sont pratiquement les mêmes matériaux qui sont utilisés que ceux de la figure 1. Sur la feuille de verre 13 on voit de nouveau un dépôt opaque 2 fait d'un émail à chaud. Le profilé 14 est déposé sur la couche 2. C'est de nouveau un cadre extrudé à partir d'un prépolymère de polyuréthane activable à l'humidité. Sa section comporte une nervure 15 sensiblement perpendiculaire à la surface du verre et également une nervure 16 toujours perpendiculaire, parallèle à la première mais placée vers l'intérieur du vitrage tandis qu'une nervure 17 toujours parallèle aux deux autres suit le bord extérieur du vitrage. Les trois nervures 15, 16 et 17 définissent deux canaux où seront déposés les cordons 18 et 19. Le cordon de colle réactive 18 qui va jouer le rôle d'une colle structurelle destinée à fixer définitivement le vitrage dans la carrosserie est ici déposé dans le canal limité dans les nervures 15 et 17 tandis que le cordon de mastic 19 est déposé lui dans le canal limité par les nervures 15 et 16. La nervure intermédiaire 15 est légèrement plus haute que les deux autres et peut jouer de ce fait le rôle de butée limitant l'écrasement des deux cordons de colle.

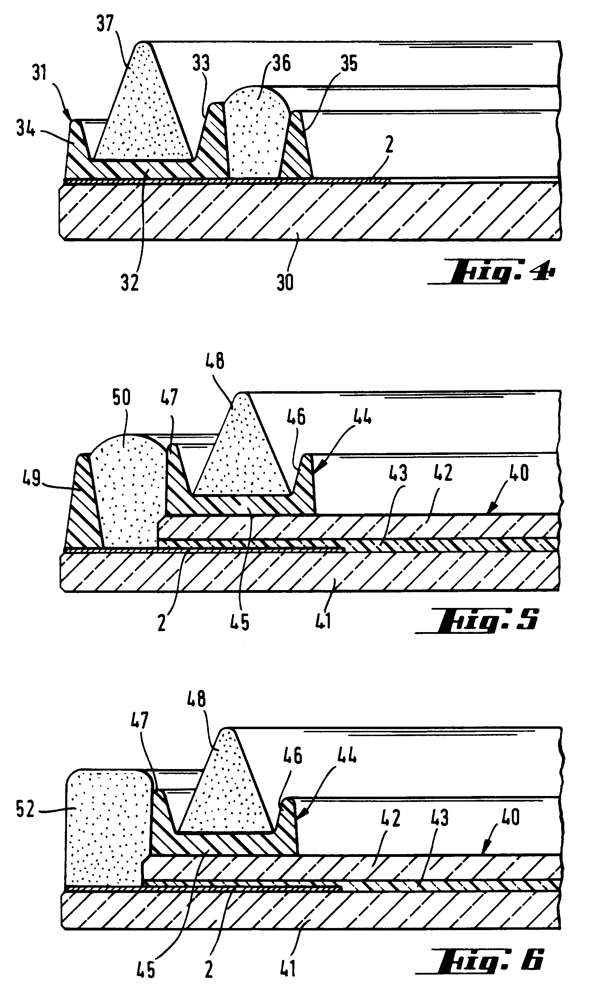

La figure 3 montre un exemple dans lequel de nouveau le vitrage 21, ou plus précisément le cadre émaillé 2, supporte le profilé 22 extrudé directement sur le vitrage. Ce profilé comporte également ici deux rainures en forme de canal, la rainure interne est limitée par la nervure interne 23 et par la nervure médiane 24 quant à la rainure externe, elle est limitée par la nervure médiane 24 et par la nervure externe 25. A côté de cette nervure externe 25 on voit une lèvre 26 qui déborde à l'extérieur du vitrage 21. Le profilé 22 est de nouveau ici, constitué d'un polyuréthane durci. Ici la colle réactive 27 est déposée dans le canal interne entre les nervures 23 et 24 tandis que le mastic 28 est placé dans le canal externe entre les deux nervures 24 et 25.

La figure 4 montre un exemple dans lequel c'est un profilé en deux parties qui a été déposé sur le verre 30 ou sur l'émail 2. Le profilé comprend une partie en forme de U 31 comportant une base 32 et deux nervures 33 et 34 et une deuxième partie séparée de la première consistant en une nervure 35. Le cordon de mastic 36 sera déposé entre les nervures 33 et 35 c'est-à-dire qu'il sera en permanence en contact avec l'émail 2. Le cordon de colle réactive 37 se trouve lui à l'intérieur du canal limité par les nervures 33 et 34.

Un autre exemple de vitrage conforme à l'invention est représenté figure 5. Il s'agit ici d'un verre feuilleté 40 qui comporte une feuille de verre extérieur 41 de dimensions supérieures à la feuille interne 42. Une couche d'émail 2 en forme de cadre a été déposée sur la face interne du verre externe.

Sur la face interne du verre 42 le long du bord, a été déposé un cadre profilé 44 avec une section en U comportant une base 45 et deux nervures 46 et 47. De nouveau la fabrication de ce profilé est réalisée par un procédé d'extrusion directement sur le vitrage après interposition éventuelle d'une couche de promoteur d'adhérence. Ce cadre profilé 44 est destiné à recevoir le cordon de colle réactive 48. Sur la zone périphérique du verre extérieur 41, du côté intérieur a été déposée égalaient par extrusion une nervure 49. De cette manière on constitue un canal qui sera occupé par le cordon 50 du mastic plastique, celui-ci est limité d'une part par la nervure 49 et d'autre part par la nervure 47 du profilé 44 ainsi que par la périphérie de la feuille interne 42. Le mastic est également ici un caoutchouc butyl. En plus de sa fonction de maintien du vitrage dans sa position de montage pendant la prise du deuxième cordon ce cordon 50 joue également une fonction d'étanchéité à la périphérie du vitrage feuilleté pour protéger la feuille intercalaire thermoplastique 43.

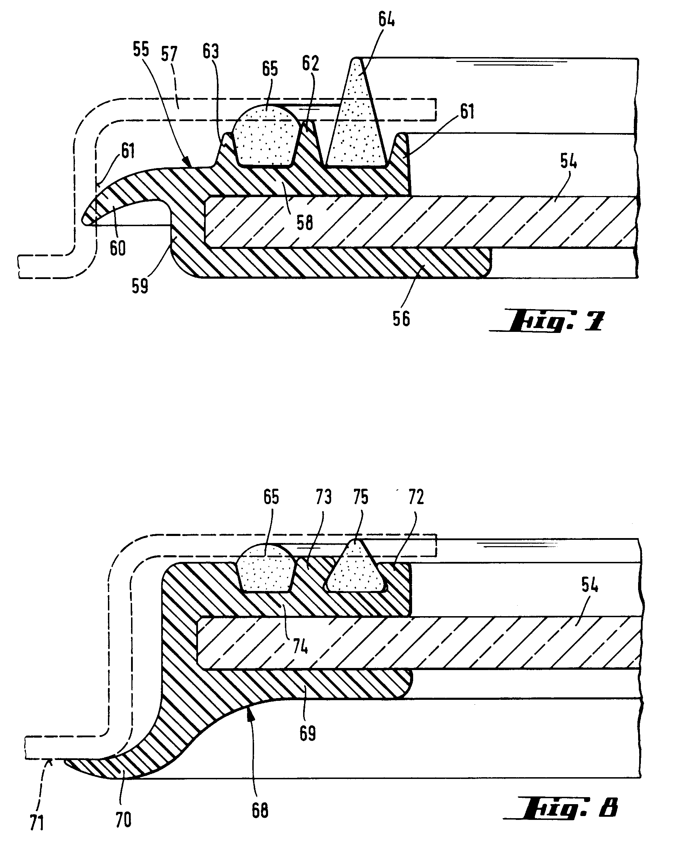

Sur la figure 6 on a présenté également un exemple de vitrage feuilleté 40 constitué de deux verres décalés, une feuille externe 41 plus grande que la feuille interne 42. Elles sont associées grâce à une feuille intercalaire thermoplastique 43. A la différence de l'exemple présenté figure 5 le cordon de mastic plastique 52 au bord de la feuille externe 41 n'est pas limité par une nervure externe. Le cordon 52 est seulement en appui sur la nervure 47 vers l'intérieur. Le mastic plastique pourra servir après le montage du vitrage à la fixation d'un profilé enjoliveur qui pourra pénétrer à force dans le mastic et fermera l'espace qui subsiste entre le vitrage et la paroi de la baie.

Les variantes présentées figures 7 et 8 se distinguent des précédentes par le fait que le cadre en polymère durci enchâsse complètement le bord du vitrage. Un tel cadre est déposé par encapsulation par exemple par une technique RIM (Reaction Injection Moulding). Le cadre 55 tel qu'il est présenté figure 7 à une section en U. Une des branches 56 du U longe la surface extérieure du bord du vitrage tandis que l'autre branche 58 longe la surface intérieure du même vitrage 54. Cette branche 58 se prolonge à l'extérieur sous forme d'une lèvre 60. Lorsque le vitrage est installé dans la baie cette lèvre s'appuie sur le bord extérieur 61 de la baie. Sur la branche 56 du U on a placé trois nervures sensiblement perpendiculaires au vitrage 61, 62 et 63. Elles créent entre elles deux rainures en forme de canal. Dans le canal interne on a déposé le cordon de colle réactive 64 et dans le canal externe le cordon de mastic 65. Il est évident qu'il s'agit pour les cordons 64 et 65 de matériaux qui possèdent de bonnes caractéristiques d'adhérence sur le cadre 55. Eventuellement, il aura été nécessaire de traiter le cadre 55 à l'aide d'un produit promoteur d'adhérence.

La variante présentée figure 8 présente un cadre 68 qui se différencie du précédent par le fait que c'est la branche interne du U qui se prolonge par une lèvre 70 vers l'extérieur du vitrage qui vient en appui sur la partie de carrosserie 71 parallèle au vitrage. De plus, les nervures 72 et 73 prévues sur la branche intérieure 74 du U ont une section telle qu'elles constituent pour le cordon de colle réactive 75 un canal refermé. De cette manière, on a un ancrage mécanique entre le cordon de colle réactive 75 et le cadre 68. Cela garantit que même dans le cas où l'on a prévu à la surface du cadre 68 une couche destinée à faciliter le démoulage dudit cadre, couche qui est anti-adhésive, on obtiendra cependant un bon accrochage une fois le vitrage posé. Ce système présente de plus l'avantage de permettre un démontage facile du vitrage.

## Revendications

1. Vitrage automobile (1 ; 13 ; 21; 30 ; 41; 54) préparé pour le collage dans la baie d'une carrosserie grâce à un cadre profilé en polymère durci lié au vitrage, avec
a. le cadre profilé (3 ; 14 ; 22 ; 31 ; 44 ; 55 ; 68) possèdant du côté dirigé vers la tôle d'appui de la carrosserie (6 ; 57) au moins une nervure (5 ; 15 ; 24 ; 33 ; 47 ; 62 ; 73) sensiblement perpendiculaire au vitrage,
b. un cordon (10 ; 18 ; 27 ; 37 ; 48 ; 64 ; 75) d'une colle réactive de montage qui est destinée à fixer le vitrage en position dans la baie de la carrosserie en se durcissant sous l'action de conditions atmosphériques données, cordon placé à côté de la nervure et parallèlement à elle,
c. de l'autre côté de la nervure, est placé un moyen destiné à supporter le poids du vitrage et à le maintenir en place dans la baie de la carrosserie temporairement pendant la phase de durcissement de la colle réactive de montage, **caractérisé en ce que** ledit moyen est un second cordon de colle (11 ; 19 ; 28 ; 36 ; 50; 52 ; 65) en mastic qui garde en permanence sa plasticité.

2. Vitrage automobile selon la revendication 1, **caractérisé en ce que** le cordon (11 ; 19 ; 28 ; 36 ; 50 ; 52, 65) de mastic qui reste plastique est placé du côté de la nervure (5 ; 16 ; 24 ; 35 ; 47 ; 62 ; 37) dirigé vers le bord du vitrage.

3. Vitrage automobile selon la revendication 1 ou 2, **caractérisé en ce que** la hauteur de la nervure (5 ; 16 ; 24 ; 35 ; 47 ; 62 ; 73) correspond sensiblement au minimum de la distance entre le vitrage monté et la tôle d'appui de la carrosserie (6 ; 57).

4. Vitrage automobile selon la revendication 2 ou 3, **caractérisé en ce que** le cadre profilé (3 ; 14 ; 22 ; 31 ; 44 ; 55 ; 68) possède pour créer des rainures en forme de canal destinées à recevoir les cordons, au moins une deuxième nervure (15 ; 16 ; 23 ; 25 ; 33 ; 34 ; 46 ; 49 ; 61 ; 63 ; 72) sensiblement perpendiculaire au vitrage.

5. Vitrage automobile selon l'une des revendications 1 à 4, **caractérisé en ce que** le cordon de mastic qui reste plastique (11 ; 19 ; 28 ; 36 ; 50 ; 52 ; 65) est à base de caoutchouc butyl.

6. Vitrage automobile selon l'une des revendications 1 à 5, **caractérisé en ce que** le cordon de colle réactive (10 ; 18 ; 27 ; 37 ; 48 ; 64 ; 75) est à base d'un prépolymère de polyuréthane monocomposant polymérisant à l'humidité.

7. Vitrage automobile selon l'une des revendications 1 à 5, **caractérisé en ce que** le cordon de colle réactive (10 ; 18 ; 27 ; 37 ; 48 ; 64 ; 75) est à base d'un polyuréthane multicomposant.

8. Vitrage automobile selon l'une des revendications 1 à 7, **caractérisé en ce que** le cadre profilé (3 ; 14 ; 22 ; 31 ; 44) est placé d'un seul côté du vitrage et obtenu directement par extrusion sur la surface du vitrage.

9. Vitrage selon l'une des revendications 1 à 7, **caractérisé en ce que** le cadre profilé (55 ; 68) enchâsse le bord du vitrage et est obtenu par une technique d'encapsulation.

10. Vitrage selon l'une des revendications 1 à 9, **caractérisé en ce que** le canal destiné à recevoir le cordon de colle réactive (75) est refermé grâce à la forme des nervures (72 ; 73) voisines pour assurer un accrochage mécanique du cordon de colle réactive avec le cadre profilé.

11. Vitrage automobile selon la revendication 10, **caractérisé en ce que** le cadre profilé (68) est obtenu par encapsulation et est revêtu d'une couche anti-adhésive facilitant le démoulage.

## Claims

1. Automobile pane (1; 13; 21; 30; 41; 54) prepared for gluing into the opening of a vehicle body by means of a profiled frame of hardened polymer connected to the pane, with
a. the profiled frame (3; 14; 22; 31; 44; 55; 68) possessing, on the side towards the support plate of the bodywork (6; 57), at least one rib (5; 15; 24; 33; 47; 62; 73) substantially perpendicular to the pane,
b. a cord (10; 18; 27; 37; 48; 64; 75) of a reactive installation adhesive which is intended for fixing the pane in position in the opening of the bodywork by hardening under the action of given atmospheric conditions, this cord being placed alongside the rib and parallel to it,
c. on the other side of the rib, there is placed a means intended for supporting the weight of the pane and holding it in place in the opening of the bodywork temporarily during the hardening phase for the reactive installation adhesive, characterized in that said means is a second cord of adhesive (11; 19; 28; 36; 50; 52; 65) of mastic which permanently retains its plasticity.

2. Automobile pane according to Claim 1, characterized in that the cord (11; 19; 28; 36; 50; 52; 65) of mastic which remains plastic is placed on the side of the rib (5; 16; 24; 35; 47; 62; 37) towards the edge of the pane.

3. Automobile pane according to Claim 1 or 2, characterized in that the height of the rib (5; 16; 24; 35; 47; 62; 73) corresponds substantially to the minimum of the distance between the mounted pane and the support plate of the bodywork (6; 57).

4. Automobile pane according to Claim 2 or 3, characterized in that the profiled frame (3; 14; 22; 31; 44; 55; 68) possesses, for creating channel-shaped grooves intended for receiving the cords, at least one second rib (15; 16; 23; 25; 33; 34; 46; 49; 61; 63; 72) substantially perpendicular to the pane.

5. Automobile pane according to one of Claims 1 to 4, characterized in that the cord of mastic which remains plastic (11; 19; 28; 36; 50; 52; 65) is based upon butyl rubber.

6. Automobile pane according to one of Claims 1 to 5, characterized in that the cord of reactive adhesive (10; 18; 27; 37; 48; 64; 75) is based upon a prepolymer of single-component polyurethane polymerizing with humidity.

7. Automobile pane according to one of Claims 1 to 5, characterized in that the cord of reactive adhesive (10; 18; 27; 37; 48; 64; 75) is based upon a multicomponent polyurethane.

8. Automobile pane according to one of Claims 1 to 7, characterized in that the profiled frame (3; 14; 22; 31; 44) is placed on one side only of the pane and is produced directly by extrusion onto the surface of the pane.

9. Pane according to one of Claims 1 to 7, characterized in that the profiled frame (55; 68) encompasses the edge of the pane and is produced by an encapsulation technique.

10. Pane according to one of Claims 1 to 9, characterized in that the channel intended for receiving the cord of reactive adhesive (75) is narrowed by means of the form of the adjacent ribs (72; 73) to ensure a mechanical locking of the cord of reactive adhesive to the profiled frame.

11. Automobile pane according to Claim 10, characterized in that the profiled frame (68) is produced by encapsulation and is coated with an antiadhesive film facilitating demoulding.

## Patentansprüche

1. Für die Verklebung mit dem Fensterrahmen einer Karosserie vorbereitete Autoglasscheibe (1;13;21;30;41;54) mit einem mit der Glasscheibe verbundenen Profilrahmen aus einem ausgehärteten Polymer, mit
a. einem Profilrahmen (3;14;22;31;44;55;68), der auf der zum Befestigungsflansch der Karosserie (6;57) hin gerichteten Seite wenigstens einen im wesentlichen senkrecht zur Glasscheibe ausgerichteten Steg (5;15;24;33;47;62;73) aufweist,
b. einem Strang (10;18;27;37;48;64;75) aus einem zur Befestigung der Glasscheibe im Fensterrahmen der Karosserie dienenden reaktiven Montagekleber, der unter der Wirkung der gegebenen atmosphärischen Bedingungen aushärtet und neben dem Steg und parallel zu diesem angeordnet ist, und
c. einem auf der anderen Seite des Steges angeordneten Mittel zum Tragen des Eigengewichts der Glasscheibe und zum vorübergehenden Halten der Glasscheibe in ihrer Position im Fensterrahmen der Karosserie während der Phase der Aushärtung des reaktiven Montageklebers, **dadurch gekennzeichnet,** daß dieses Mittel ein zweiter Kleberstrang (11;19;28;36;50;52;65) aus einer dauerplastischen Klebermasse ist.

2. Autoglasscheibe nach Anspruch 1, dadurch gekennzeichnet, da» der Strang(11;19;28;36;50;52;65) aus dauerplastischer Klebermasse auf der zum Scheibenrand hin gerichteten Seite des Stegs (5;16;24;35;47;62;37) angeordnet ist.

3. Autoglasscheibe nach Anspruch 1 oder 2, dadurch gekennzeichnet, daß die Höhe des Steges (5;16;24;35;47;62;73) im wesentlichen dem Mindestabstand zwischen der montierten Glasscheibe und dem Befestigungsflansch der Karosserie (6;57) entspricht.

4. Autoglasscheibe nach Anspruch 2 oder 3, dadurch gekennzeichnet, daß der Profilrahmen (3;14;22;31;44;55;68) zur Bildung kanalartiger Vertiefungen für die Aufnahme der Stränge wenigstens einen zweiten im wesentlichen senkrecht zur Glasscheibe ausgerichteten Steg (15;16;23;25;33;34;46;49;61;63;72) aufweist.

5. Autoglasscheibe nach einem der Ansprüche 1 bis 4, dadurch gekennzeichnet, daß der dauerplastische Kleberstrang (11;19;28;36;50;52;65) eine Klebermasse auf der Basis von Butylkautschuk ist.

6. Autoglasscheibe nach einem der Ansprüche 1 bis 5, dadurch gekennzeichnet, daß der Reaktionskleberstrang (10;18;27;37;48;64;75) aus einem feuchtigkeitshärtenden Einkomponenten-Polyurethan-Präpolymer besteht.

7. Autoglasscheibe nach einem der Ansprüche 1 bis 5, dadurch gekennzeichnet, daß der Reaktionskleberstrang (10;18;27;37;48;64;75) aus einem Mehrkomponenten-Polyurethan besteht.

8. Autoglasscheibe nach einem der Ansprüche 1 bis 7, dadurch gekennzeichnet, daß der Profilrahmen (3;14;22;31;44) auf einer Seite der Glasscheibe angeordnet und unmittelbar durch Extrusion auf der Oberfläche der Glasscheibe hergestellt ist.

9. Autoglasscheibe nach einem der Ansprüche 1 bis 7, dadurch gekennzeichnet, daß der Profilrahmen (55;68) den Scheibenrand übergreift und nach der Technik der Umspritzung hergestellt ist.

10. Glasscheibe nach einem der Ansprüche 1 bis 9, dadurch gekennzeichnet, daß der für die Aufnahme des Reaktionskleberstrangs (75) bestimmte Kanal dank der Form der benachbarten Stege (72;73) sich verengt, um eine mechanische Verankerung des Reaktionskleberstrangs mit dem Profilrahmen sicherzustellen.

11. Autoglasscheibe nach Anspruch 10, dadurch gekennzeichnet, daß der Profilrahmen (68) durch Umspritzen hergestellt und mit einer das Entformen erleichternden Antihaftschicht versehen ist.
